(19) Europäisches Patentamt / European Patent Office / Office européen des brevets

(11) **EP 2 773 796 B1**

(12) **FASCICULE DE BREVET EUROPEEN**

(45) Date de publication et mention de la délivrance du brevet:
**09.01.2019 Bulletin 2019/02**

(21) Numéro de dépôt: **12794405.6**

(22) Date de dépôt: **30.10.2012**

(51) Int Cl.:
*C25D 13/02* (2006.01)    *C25D 13/22* (2006.01)
*C25D 13/04* (2006.01)    *C25D 13/00* (2006.01)
*H01M 4/04* (2006.01)    *H01M 4/139* (2010.01)
*C25D 5/50* (2006.01)    *H01F 41/26* (2006.01)
*H01M 4/1391* (2010.01)    *H01M 4/36* (2006.01)
*H01M 4/485* (2010.01)    *H01M 4/505* (2010.01)
*H01M 10/0525* (2010.01)    *H01M 10/0562* (2010.01)
*H01M 4/02* (2006.01)    *H01M 4/131* (2010.01)

(86) Numéro de dépôt international:
**PCT/FR2012/052504**

(87) Numéro de publication internationale:
**WO 2013/064776 (10.05.2013 Gazette 2013/19)**

(54) **PROCÉDÉ DE RÉALISATION DE COUCHES MINCES DENSES PAR ÉLECTROPHORÈSE**

VERFAHREN ZUR HERSTELLUNG VON DÜNNEN DICHTEN SCHICHTEN DURCH ELEKTROPHORESE

PROCESS OF MANUFACTURING THIN DENSE LAYERS BY ELECTROPHORESIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2011 FR 1159897**

(43) Date de publication de la demande:
**10.09.2014 Bulletin 2014/37**

(73) Titulaire: **I-TEN**
**69570 Dardilly (FR)**

(72) Inventeurs:
- **BOUYER, Frédéric**
  **F-21160 Perrigny Les Dijon (FR)**
- **VUILLEMIN, Bruno**
  **F-39230 Darbonnay (FR)**
- **GABEN, Fabien**
  **69130 Ecully (FR)**

(74) Mandataire: **Schmidt, Martin Peter**
**IXAS Conseil**
**15, rue Emile Zola**
**69002 Lyon (FR)**

(56) Documents cités:
WO-A1-2010/119443    WO-A2-00/69790
BE-A1- 854 762    US-A1- 2003 003 237
US-A1- 2003 102 222    US-A1- 2011 045 351
US-A1- 2011 227 000    US-B1- 6 251 473

- GRINIS L ET AL: "Electrophoretic deposition and compression of titania nanoparticle films for dye-sensitized solar cells", JOURNAL OF PHOTOCHEMISTRY AND PHOTOBIOLOGY, A: CHEMISTRY, ELSEVIER SEQUOIA, LAUSANNE, CH, vol. 198, no. 1, 5 July 2008 (2008-07-05), pages 52-59, XP022681481, ISSN: 1010-6030, DOI: 10.1016/J.JPHOTOCHEM.2008.02.015 [retrieved on 2008-03-04]

**Description**

**Domaine de l'invention**

La présente invention appartient au domaine des couches minces, et plus particulièrement au domaine des couches pour dispositif électriques ou électroniques en couches minces, tels que l'électronique dite imprimée (transistor, résistances, circuits, diodes, capacités, inductance, écrans), les batteries (et notamment des batteries à ions de lithium) et les cellules photovoltaïques.

**État de la technique**

On connaît de nombreuses techniques pour réaliser des couches minces denses. Les techniques de dépôt sous vide sont largement utilisées pour la fabrication de dispositifs électroniques en couches minces. Elles regroupent des techniques de natures assez différentes, telles que : le dépôt par voie physique (PVD - Physical Vapour Déposition), le dépôt par décharge luminescente, le dépôt par voie chimique réactif (Chemical Vapor Déposition CVD), éventuellement assisté par plasma, l'épitaxie par phase gazeuse. D'une manière générale, le dépôt sous vide permet de réaliser des couches minces denses d'excellente qualité et très adhérentes, mais la vitesse de dépôt reste faible (typiquement de l'ordre de 1 $\mu$m/h à 10 $\mu$m/h). Le dépôt sous vide peut être complexe et coûteux à cause de la technique du vide qui s'y rattache. La matière première, souvent coûteuse à cause de sa très grande pureté et son conditionnement sous forme de cibles, n'est utilisée qu'en partie, car il peut y avoir un dépôt sur les parois du réacteur et les masques, nécessitant ainsi des opérations de nettoyage ou de décapage ; ces dernières peuvent contribuer de manière significative au coût d'exploitation du procédé. Par ailleurs, ces techniques de dépôt ou de décapage imposent souvent l'utilisation de gaz fortement corrosifs. Et finalement, dans certains cas, les techniques de dépôt sous vide impliquent des températures élevées qui ne sont pas supportées par tous types de substrat.

Les techniques de dépôt sous vide connaissent un domaine d'application extrêmement large qui n'est pas limité aux domaines de la microélectronique. A titre d'exemple, le dépôt de photopiles en couches minces à base de silicium se fait par décharge luminescente, et le dépôt PVD est également la technologie la plus utilisée actuellement pour la fabrication des microbatteries en couches minces.

Les techniques de PVD procèdent à des températures généralement plus faibles ; d'une manière générale, elles conduisent à des couches de bonne qualité. Cependant, du fait de la différence de vitesse d'évaporation entre les différents éléments, il est difficile de déposer des compositions (ou alliages) complexes avec de telles techniques, et de maîtriser la stoechiométrie du dépôt. Le PVD est parfaitement adaptée à la réalisation de couches très minces, mais dès que l'on cherche à augmenter l'épaisseur de dépôt (a titre d'exemple des épaisseurs supérieures à 5 $\mu$m), une croissance colonnaire apparaît, et le temps de dépôt devient important.

Une autre technologie pour réaliser des couches minces est le dépôt par voie sol-gel, dans laquelle on dépose sur la surface d'un substrat un réseau polymérique inorganique formé après des étapes d'hydrolyse, polymérisation et condensation de précurseurs appropriés. La transition sol-gel apparait durant l'évaporation du solvant qui accélère les processus réactionnels en surface. Cette technique permet de réaliser des dépôts compacts de très faible épaisseur (voir par exemple la demande de brevet WO 2010/076428, Centre National de la Recherche Scientifique), de l'ordre de la centaine de nanomètres. Pour accroître l'épaisseur du dépôt sans induire l'apparition de fissures ou craquelures, il convient de procéder par étapes successives. De ce fait, cette technique pose des problèmes de productivité industrielle, dès lors que l'on cherche à augmenter l'épaisseur du dépôt.

On connaît également les techniques de projection par voie plasma (en anglais « thermal spray ») qui sont adaptées à la fabrication de dépôts relativement épais, de plusieurs centaines de microns d'épaisseur, mais elles sont peu précises et ne permettent pas d'obtenir des films minces d'épaisseur suffisamment homogène et contrôlée pour utilisation dans l'électronique, optique et électrotechnique.

On connaît également des techniques d'impression d'encres, qui sont utilisées notamment pour la fabrication des batteries Li-ion (voir l'ouvrage « Advances in Lithium-Ion Batteries » (ed. W. van Schalkwijk et B. Scrosati), paru en 2002 (Kluever Academic / Plenum Publishers). Elles permettent de réaliser des dépôts d'épaisseurs typiquement comprises entre 40 et 400 $\mu$m. En fonction de la composition souhaitée, les encres (ou pâtes) déposées pour former les électrodes de ces batteries contiennent des particules de différents matériaux, mais doivent également comporter des liants (organiques) et des solvants qui sont évaporés lors de l'étape de séchage des électrodes. Si les couches déposées de cette manière doivent présenter une conductivité électrique on réalise une étape de calandrage pour améliorer la qualité des contacts électriques entre les particules et compacter les dépôts. Après cette étape de compression, les particules actives des électrodes occupent typiquement environ 60% du volume du dépôt, ce qui signifie qu'il reste généralement 40% de porosités entre les particules. Pour certaines applications, par exemple dans les batteries de type Li-ion, ces porosités peuvent être remplies par un électrolyte.

Pour réaliser des dépôts denses, sans porosité, des pâtes visqueuses sont également utilisées. Cette technique met en oeuvre des particules mixées à des liants, plastifiants organiques et autres solvants. Après dépôt de la pâte, une étape de séchage est réalisée pour évaporer les solvants, suivie d'une étape de brûlage qui vise à calciner et évacuer les composants organiques ayant servis à réaliser la pâte. Un tel procédé génère des vapeurs de composés organiques en grande quantité, ce qui pose des problèmes liés à la gestion des rejets et aux contraintes de sécurité et environnementale, mais ainsi on perd également de la matière première qui n'est pas valorisée dans la chaine industrielle. Une fois tous ces composés évaporés et brûlés, on obtient un dépôt poreux qui doit être compacté pour combler les cavités et défauts laissés libres après le brulage des liants. Le compactage sera d'autant plus facile que l'extrait sec des encres est élevé et que la taille de particules importante (supérieure au micromètre). Ce fort extrait sec impose une viscosité élevée qui ne permet pas de réaliser des couches minces denses d'une épaisseur inférieure à environ 20 $\mu$m. Ces dépôts sont ensuite frittés à haute température pour obtenir des couches denses.

Les techniques d'encrage décrites ci-dessus peuvent permettre de réaliser des dépôts relativement minces. Cependant, pour obtenir des dépôts de faible épaisseur (entre 1 et 5 $\mu$m environ), il est nécessaire de disposer d'une encre fluide. La fluidité des encres dépend de leur extrait sec, de la taille de particules, de la nature du solvant et d'éventuels composés organiques dissous dans cette encre. Pour réaliser des dépôts en couches minces, il est nécessaire de réduire l'extrait sec, et de ne pas avoir une taille de particules trop faible (supérieure à la centaine de nanomètres). En revanche, cette augmentation de la quantité de solvant augmente le risque de former des fissures, cavités et agglomérats dans la couche, pendant les phases de séchage. Les dépôts deviennent alors extrêmement difficiles à compacter. La compaction finale du dépôt est obtenue par évaporation du solvant contenu dans l'encre. Cette étape de séchage est difficile à maitriser car les régions de plus faibles densités, avec des porosités localement plus faibles, sécheront plus vite que les zones de plus fortes densités. Les effets capillaires induits par ces différences locales de niveau de séchage conduiront les zones de plus fortes densités, encore imprégnées, à se regrouper. La densification de ces dépôts ne peut être effectuée qu'à l'aide de compaction sous de très fortes pressions (d'autant plus élevées que la taille des particules sera faible) et/ou de frittage à des températures élevées, proches de la température de fusion du matériau constituant les particules. Tous les substrats ne supportent pas de telles températures, et de surcroît les techniques actuelles de dépôt en phase liquide décrites ci-dessus ne permettent pas de maîtriser précisément l'épaisseur de dépôt.

On a également déposé des matériaux en couches minces par électrophorèse ; cela a été décrit surtout pour des couches destinées à être utilisées dans des dispositifs électrochimiques et en particulier dans les batteries. Par exemple, le brevet US 7,662,265 (Massachusetts Institute of Technology) décrit la fabrication de dispositifs électrochimiques en couches minces par électrophorèse, dans lequel une des électrodes (anode ou cathode) et l'électrolyte solide sont obtenus simultanément, l'autre électrode étant formée préalablement au dépôt électrophorétique, les électrolytes solides étant des électrolytes polymères. Le brevet US 6,887,361 (University of California) décrit un procédé pour former un revêtement céramique sur un substrat de dispositif électrochimique à l'état solide. Le dépôt est réalisé par électrophorèse d'une suspension de particules de céramique dans l'alcool isopropylique, suivi d'un séchage et d'un frittage. Le procédé est applicable essentiellement aux cellules à combustible à oxyde solide (SOFC). Les demandes de brevet US 2007/184345, WO 2007/061928, US 2008/286651 et WO 2010/011569 (Infinite Power Solutions) décrivent des dispositifs électrochimiques comprenant une couche cathodique déposée par électrophorèse à partir d'une poudre de taille micronique de $LiCoO_2$ ; cette couche comporte cependant des cavités, et elle doit être densifiée par un frittage à haute température.

Le brevet US 7,790,067 (3G Solar Ltd) décrit le dépôt d'une électrode nanoporeuse en $TiO_2$ par électrophorèse à partir d'une suspension de nanoparticules de $TiO_2$ ; L'épaisseur de l'électrode est de l'ordre de 10 $\mu$m, après densification du dépôt humide.

Certains documents décrivent l'utilisation de l'électrophorèse pour la réalisation de certaines parties de batteries en couches minces ; dans ces documents, l'électrophorèse conduit également à des couches poreuses. Le brevet JP 4501247 (DENSO) décrit un procédé de fabrication par électrophorèse d'une électrode. La demande de brevet JP 2002-042792 (DENSO) décrit un procédé de dépôt d'un électrolyte solide sur une électrode d'une batterie, le dépôt étant effectué par électrophorèse ; aucune densification n'est effectuée après le dépôt. Les électrolytes visés sont essentiellement les électrolytes polymères, ainsi que le iodure de lithium. Cependant, ces couches sont toutes poreuses.

La publication « Electrophoretic deposition of Ba0,77Ca0,23TiO3 nanopowders » par E. Antonelli et al., parue dans Journal of Materials Processing Technology 203 (2008), p. 526-531, décrit un procédé de dépôt par électrophorèse de poudres nanométriques du composé indiqué pour former des couches épaisses. Pour obtenir des couches denses, ils ont soumis les couches électrophorétiques à un frittage à 1300°C, et c'est pourquoi le dépôt du film a été effectué sur des feuilles en platine qui sont inertes à cette température. Cette température de frittage a été mesurée sur un matériau massif et a été appliquée pour le frittage du dépôt.

Le problème que la présente invention cherche à résoudre est de proposer un procédé de dépôt de couches minces denses, exemptes de porosité, sur des substrats qui ne supportent pas des températures très élevées, permettant d'accéder à une large gamme de compositions chimiques, et qui n'implique pas de traitement thermique à haute température incompatible avec de nombreuses situations industrielles (par exemple : dépôt sur une couche d'un métal à bas point de fusion comme l'aluminium ; risque d'interdiffusion aux interfaces ; recuit indésirable d'une couche contenue dans le substrat ; risque de transformation de phase).

**Objets de l'invention**

Un premier but de la présente invention est un procédé de fabrication de couches minces denses présentant une grande précision géométrique, notamment une épaisseur contrôlée avec précision, et un très faible nombre de défauts, par un procédé assurant une vitesse de dépôt élevée et présentant un coût d'investissement et d'exploitation peu élevé.

Un autre but de l'invention est de fabriquer ces couches minces par un procédé facile à mettre en oeuvre industriellement et peu polluant.

Encore un autre but de l'invention est de disposer d'un procédé permettant de réaliser très simplement des couches minces de compositions chimiques variées.

Les inventeurs ont trouvé que l'électrophorèse de suspensions colloïdales stables de nanoparticules permet de déposer des couches minces présentant une vaste gamme de compositions chimiques, et que ces couches peuvent être densifiées par un traitement thermique à relativement basse température.

Ces objectifs sont atteints grâce à un procédé de dépôt d'une couche mince dense, présentant une porosité inférieure à 20% et comportant au moins un matériau Px sur un substrat, dans lequel :

(a) on approvisionne une suspension colloïdale comportant des nanoparticules d'au moins un matériau Px, le diamètre $D_{50}$ desdites nanoparticules d'au moins un matériau Px étant inférieur à 100 nm, de préférence inférieur à 30 nm, et encore plus préférentiellement inférieur à 10 nm,

(b) on immerge ledit substrat dans ladite suspension colloïdale, conjointement avec une contre-électrode,

(c) on applique une tension électrique entre ledit substrat et ladite contre-électrode de manière à obtenir le dépôt électrophorétique d'une couche compacte comportant des nanoparticules dudit au moins un matériau Px sur ledit substrat,

(d) on sèche ladite couche compacte,

(e) on procède à une densification mécanique de ladite couche,

(f) on procède à une densification thermique à une température $T_R$ qui ne dépasse pas 0,7 fois (et de préférence ne dépasse pas 0,5 fois) la température de fusion (exprimée en °C) du matériau Px le plus fusible, préférentiellement à une température comprise entre 160°C et 600°C, et encore plus préférentiellement à une température comprise entre 160°C et 400°C,

sachant que les étapes (e) et (f) peuvent être effectuées simultanément, ou peuvent être inversées.

Dans le mode particulier selon l'invention pour lequel les étapes (e) et (f) sont inversées, la température minimale $T_R$ de la densification thermique est largement supérieure à 160°C.

Ladite solution colloïdale peut comporter des nanoparticules de plusieurs matériaux (appelés $Px_1$, $Px_2$ .....) différents. Elle peut comporter en plus des particules d'au moins un matériau Mx, lesdites particules pouvant être des nanoparticules ou non. Le diamètre $D_{50}$ desdits nanoparticules d'au moins un des matériaux Px (et de préférence de tous les matériaux Px) est inférieur à 100 nm, de préférence inférieur à 30 nm et encore plus préférentiellement inférieur à 10 nm. L'utilisation de nanoparticules de si petite taille permet d'obtenir une grande densité après densification. Cette densité atteint avantageusement 80%, de manière préférée 90%, et de manière encore plus préférée 95% de la densité théorique du corps massif.

Dans un mode de réalisation particulièrement avantageux, le procédé, et notamment les étapes de densification, sont conduits de manière à ce que la couche mince dense obtenue présentant une porosité inférieure à 20%, présente une porosité inférieure à 10%, de préférence inférieure à 5%.

L'étape de densification mécanique est très avantageuse pour le procédé selon l'invention. Elle peut précéder l'étape de densification thermique, ou être effectuée en même temps que cette dernière, ou encore même être effectuée après cette dernière. Les inventeurs ont trouvé qu'elle permet de densifier les couches minces par voie thermique à une température plus basse, surtout lorsque les couches minces ont été obtenues à partir de suspensions colloïdales de nanoparticules. Dans ce but, on préfère d'ailleurs des particules présentant une forme approximativement sphérique ou une forme de cube ; cela représente une variante de ce mode de réalisation. Selon l'invention, la densification mécanique peut être effectuée par exemple par un passage entre deux rouleaux, par pressage, en une ou plusieurs étapes.

La densification thermique a lieu à une température ($T_R$) relativement basse (mais suffisamment élevée pour que la densification se fasse), qui dépend du point de fusion du matériau, de la taille des nanoparticules et de l'intensité de la densification mécanique. $T_R$ ne dépasse avantageusement pas 600°C, et de préférence ne dépasse pas 500°C ou même 400°C. La densification thermique est avantageusement réalisée sous vide, afin de minimiser la pollution de la surface des particules déposées, ou encore sous gaz inerte.

Un autre but de l'invention est d'obtenir à l'issue du dépôt par électrophorèse, des couches de très forte compacité, exemptes notamment, de cavités, fissures et agglomérats, afin de faciliter la densification à basse température. Pour cela, la bonne stabilité de la suspension colloïdale est un élément essentiel du procédé.

De préférence, le potentiel zêta de la suspension colloïdale est ajusté à une valeur supérieure à 60 mV, afin d'avoir une suspension stable ne formant pas d'agglomérats de particules pouvant conduire à des défauts dans les couches déposées. Cette suspension peut contenir un stabilisant stérique ou, de préférence, électrostatique.

Dans un mode de réalisation particulier de l'invention, les suspensions colloïdales ne contiennent pas de stabilisant stérique et/ou électrostatique. Ces suspensions sont obtenues pour des extraits sec compris entre 2 et 20 g/L, de préférence entre 3 et 10 g/L, et plus particulièrement de l'ordre de 4 g/L. Dans ces suspensions, la taille des particules est en outre de préférence inférieure à 100 nm, et encore plus préférentiellement inférieure à 50 nm. Dans ce cas, le potentiel Zêta de la suspension est généralement inférieure à 40 mV, et plus particulièrement compris entre 25 et 40 mV.

Le dépôt électrophorétique des nanoparticules peut être facilité grâce à une étape de dépôt d'un composé destiné à abaisser le potentiel Zêta sur les zones conductrices du substrat préalablement au dépôt des particules Px.

Un autre but de l'invention est le dépôt de films minces de compositions chimiques très variées, pouvant associer plusieurs phases et ce afin d'accroître les fonctionnalités des dépôts. Ce but est atteint grâce à l'utilisation de la technique d'électrophorèse qui permet aisément de déposer des couches à partir de suspensions de mélanges de particules.

Un autre but de l'invention est de pouvoir contrôler très précisément les épaisseurs déposées (dans une gamme d'épaisseur pouvant aller de quelques centaines de nanomètres à quelques dizaines voire centaine de micromètre). Plus précisément, on souhaite disposer d'un procédé qui assure une parfaite homogénéité de l'épaisseur sur toute la surface du dépôt, et cela même sur des substrats rugueux ou de forme non plate, ainsi qu'une excellente reproductivité et répétabilité à l'échelle industrielle.

Dans un mode de réalisation avantageux, l'épaisseur de la couche après densification est inférieure à 10 $\mu$m, préférentiellement inférieure à 5 $\mu$m et encore plus préférentiellement inférieure à 2 $\mu$m.

Encore un autre but est d'économiser au mieux la matière première.

Ces différents objectifs sont atteints par l'utilisation de l'électrophorèse et par le contrôle précis du courant de dépôt tout au long du dépôt, sachant que le dépôt par électrophorèse ne se forme que sur un substrat suffisamment conducteur, et notamment ne se forme pas sur un masque isolant utilisé pour délimiter la zone de dépôt.

Un autre objet de l'invention est l'utilisation du procédé selon l'invention pour la fabrication de couches minces, et notamment de couches diélectriques, magnétiques, ferroélectriques, piézoélectriques, optiques ou de couches d'électrode, dans des dispositifs électroniques, électriques ou électrotechniques, et de préférence dans des dispositifs sélectionnés dans le groupe formé par : les batteries, les capacités, les résistances, les inductances, les transistors, les cellules photovoltaïques, les diodes, les guides d'ondes.

## Description des figures

Les figures 1(a),(b),(c) et (d) montrent de manière schématique des couches formées par empilement de particules de forme approximativement isotrope. La figure 1(e) montre un film déposé par PVD sur un substrat.

Les figures 2a et 2b représentent de manière schématique des dispositifs pour la mise en oeuvre du procédé selon l'invention.

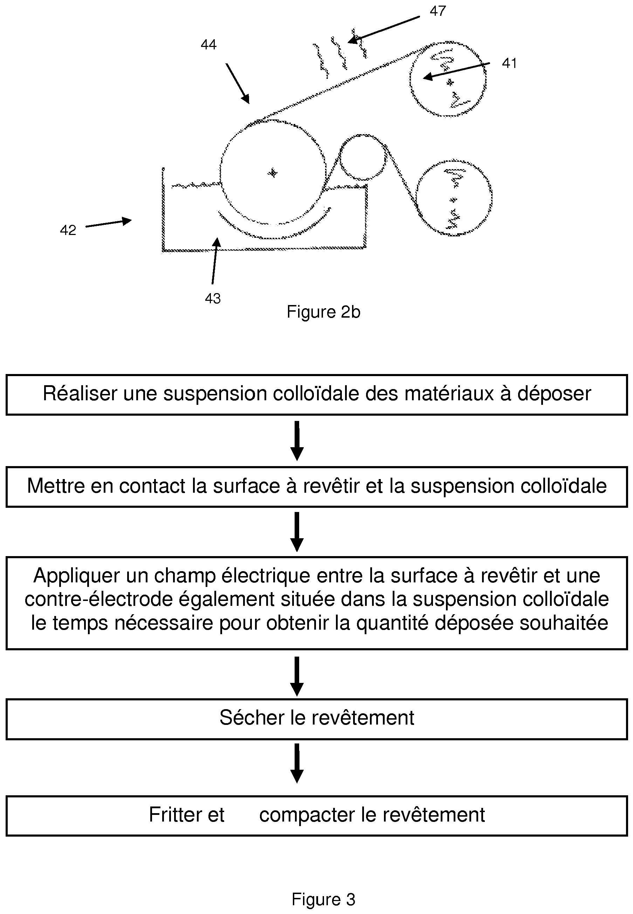

Le diagramme de la figure 3 présente un mode de réalisation typique du procédé selon l'invention.

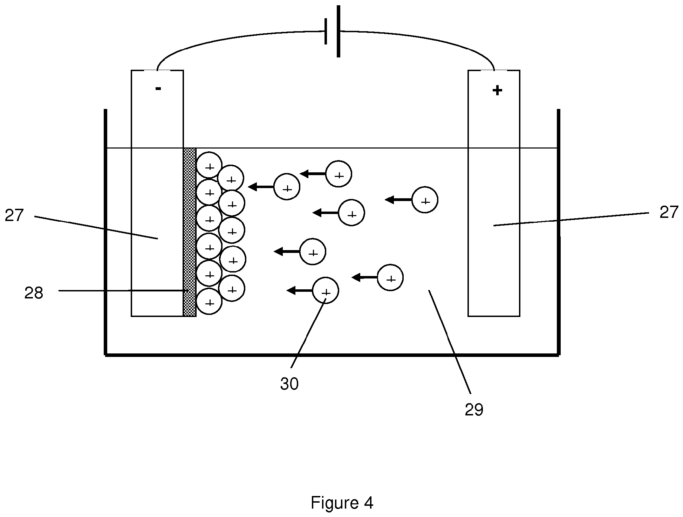

La figure 4 illustre le principe de fonctionnement des dépôts par électrophorèse.

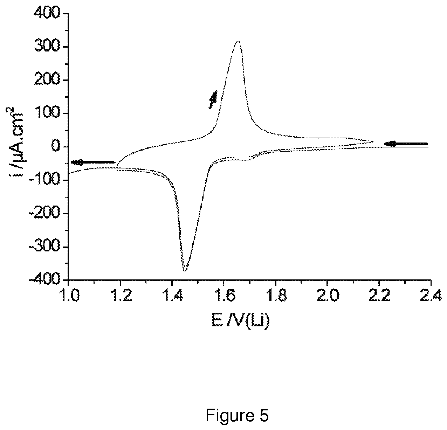

La figure 5 représente la courbe de voltampérométrie cyclique à 0,1 V/sec d'une électrode de $Li_4Ti_5O_{12}$ obtenue selon un mode particulier de réalisation selon l'invention (sans ajouts de stabilisants).

## Description détaillée de l'invention

Dans le cadre de la présente invention, on entend par « dépôt électrophorétique » ou « dépôt par électrophorèse » une couche déposée par un procédé de dépôt de particules électriquement chargées en surface, préalablement mises en suspension dans un milieu liquide, sur un substrat conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt compact de particules se forme sur le substrat, si le potentiel zêta présente une valeur appropriée comme il sera expliqué ci-dessous.

Dans le cadre du présent document, la taille d'une particule est sa plus grande dimension. Ainsi, une « nanoparticule » est une particule dont au moins de ses dimensions est inférieure à 100 nm. La « taille de particules » ou « taille moyenne de particules » d'une poudre ou d'un ensemble des particules est donnée en $D_{50}$.

Le « potentiel zêta » d'une suspension est défini comme la différence de potentiel existant entre le sein de la solution, et le plan de cisaillement de la particule. Il est représentatif de la stabilité d'une suspension. Le plan de cisaillement (ou rayon hydrodynamique) correspond à une sphère imaginaire autour de la particule dans laquelle le solvant bouge avec la particule lorsque les particules se déplacent dans la solution. La base théorique et la détermination du potentiel zêta sont connues de l'électrochimiste qui développe des dépôts par électrophorèse ; il peut être déduit de la mobilité électrophorétique. Pour la mesure directe du potentiel zêta, il existe différentes techniques et dispositifs commercialisés. Lorsque l'extrait sec est faible, on peut mesurer le potentiel zêta à l'aide d'un équipement de type Zetasizer Nano ZS de la société Malvern. Cet équipement mesure à l'aide de dispositifs optiques les vitesses de déplacement des particules en fonction du champ électrique qui leur est appliquée. Aussi, il faut que la solution soit très diluée pour permettre le passage de la lumière. Lorsque l'extrait sec est plus important, il est possible de mesurer le potentiel zêta à l'aide de techniques d'acoustophorèse, en utilisant par exemple un dispositif appelé « acoustosizer » de la société Colloidal Dynamics. La vitesse des particules est alors mesurée par des techniques acoustiques.

On entend par « dispersant » un composé apte à stabiliser la suspension colloïdale et notamment à éviter que les particules ne s'agglomèrent.

Les caractéristiques essentielles du procédé selon l'invention sont la réalisation d'un dépôt par voie électrophorétique de particules d'un matériau Px à partir d'une suspension colloïdale, le séchage de la couche ainsi obtenue, sa densification mécanique et/ou sa densification thermique. Ce procédé permet de réduire de manière significative la quantité de défauts dans les couches obtenues par rapport aux procédés de dépôt connus, notamment les grandes porosités, cavités, craquelures et agglomérats. La qualité des couches déposées est meilleure lorsque la suspension à partir de laquelle le dépôt est effectué est suffisamment stable.

Le procédé selon l'invention permet le dépôt de couches minces denses d'épaisseur très variable. Même s'il est vrai que la vitesse de dépôt élevée de l'électrophorèse permet le dépôt de couches épaisses dans des conditions économiques très favorables, le procédé selon l'invention, dans la mesure où il implique une densification mécanique de nano-poudres, donne des bons résultats surtout pour des couches minces, notamment celles d'une épaisseur inférieure à 10 µm, de préférence inférieure à 5 µm. Il est aisément possible de préparer ainsi des couches minces denses d'une épaisseur de 1 µm, voir 0,1 µm ou moins encore. Le procédé selon l'invention permet un bon contrôle de l'épaisseur finale obtenue, c'est-à-dire il est à la fois répétable et reproductible. Il n'implique pas un coût d'investissement élevé comparé aux techniques de dépôt sous vide.

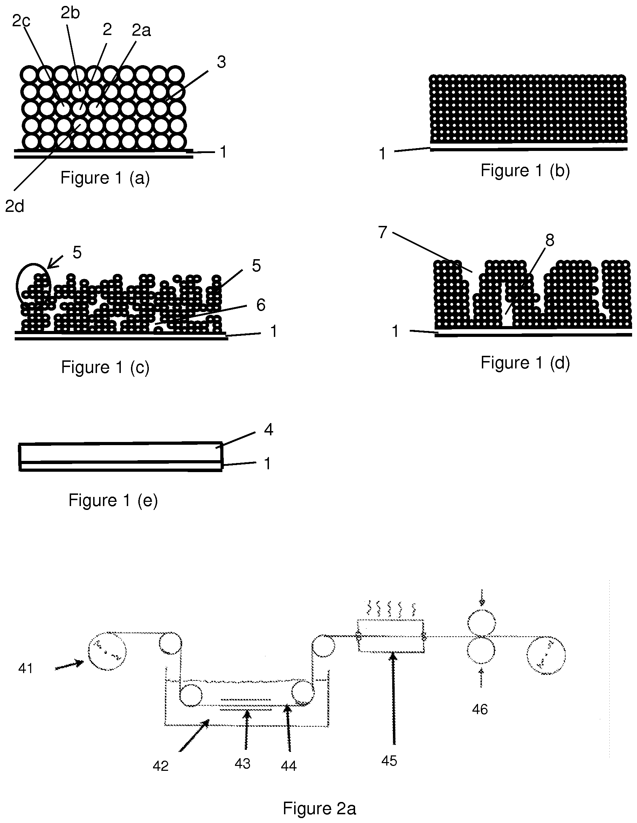

Les figures 1a à 1c illustrent les différences entre les porosités **3** intra agglomérats, situées entre les particules **2,** et que nous appellerons dans ce document « porosités », et les porosités **6** inter agglomérats, situées entre les agglomérats **5** et que nous appellerons « cavités » **6**. La figure 1(d) illustre un dépôt de particules avec des fissures apparues après séchage, elles peuvent être ouvertes (débouchantes) **7** ou internes (non débouchantes) **8**. La figure 1(e) illustre un dépôt dense **4** tel qu'il peut être obtenu par des techniques de type PVD ; la porosité de ces dépôts denses est proche de 0% car ils ne sont pas formées par empilement de particules.

Un dépôt compact est un dépôt qui ne comporte pas de cavités, ni de fissures. En revanche, il comporte des porosités dont le taux s'exprime en pourcentage et se calcule de la manière suivante :

$$\text{Porosité [\%]} = [(\text{densité du matériau massif} - \text{densité vraie})/\text{densité vraie}] \times 100$$

sachant que la « densité vraie » est la densité mesurée sur la couche déposée et que la densité du matériau massif est la densité massive du matériau déposé, en faisant abstraction de la présence de particules dont l'empilement forme une porosité.

Nous décrivons ici en détail chacune des étapes du procédé selon l'invention.

*Préparation des suspensions*

De manière à avoir un dépôt parfaitement homogène en épaisseur, sans rugosité, et avec peu de défauts et le plus compact possible à l'issue du procédé de dépôt par électrophorèse, le dépôt est préférentiellement réalisé à partir de suspensions colloïdales très stables. Cela permet de minimiser la formation de pores, cavités et amas préjudiciables à la densification du dépôt. La stabilité des suspensions dépend de la taille des particules ainsi que de la nature du solvant utilisé et du stabilisant, s'il en est utilisé, ayant servi à stabiliser la suspension colloïdale.

La stabilité des suspensions peut être exprimée par leur potentiel zêta. Dans le cadre de la présente invention, la suspension est considérée comme stable lorsque son potentiel zêta est supérieur à 40 mV, et très stable lorsqu'il est supérieur à 60 mV. En revanche, lorsque le potentiel zêta est inférieur à 20 mV, des agglomérats de particules peuvent apparaitre. Aussi, pour garantir la bonne compacité du film mince, les dépôts sont de préférence réalisés à partir de suspensions colloïdales ayant un potentiel zêta supérieur à 40 mV, et encore plus préférentiellement 60 mV (en valeur absolue).

Afin de faciliter la densification thermique du dépôt et garantir la possibilité de faire des dépôts en couches minces avec des épaisseurs et des profils (rugosité) très précis, les suspensions colloïdales doivent contenir des particules de taille nanométriques. Si plusieurs matériaux Px sont présents dans ladite suspension colloïdale, il est préféré qu'ils soient tous présent sous la forme de nanoparticules. Ces particules ont de préférence une taille de particules moyenne $D_{50}$ inférieure à 100 nm, et plus préférentiellement (surtout dans le cas où la suspension comporte des particules de matériaux à point de fusion élevés) inférieure à 30 nm. En effet, avec des particules de faibles dimensions, la densification thermique du dépôt est grandement facilitée dès lors que le dépôt est compact. Cependant, avec une densification mécanique préalable, on peut accroitre davantage la compacité du dépôt et créer des défauts cristallographiques ponctuels à l'intérieur des particules et à leur surface qui vont contribuer à accélérer le processus de densification thermique, et cela à des températures encore plus faibles.

Les suspensions colloïdales destinées à être utilisées en électrophorèse comportent un solvant isolant électrique, qui peut être un solvant organique, ou de l'eau déminéralisée, ou un mélange de solvants, et des particules à déposer ; les suspensions colloïdales peuvent également comporter un ou plusieurs stabilisants. Dans une suspension stable, les particules ne s'agglomèrent pas entre elles pour créer des amas susceptibles d'induire des cavités, agglomérats et/ou défauts importants dans le dépôt. Les particules restent isolées dans la suspension. Aussi, dans un mode de réalisation de la présente invention, la stabilité de la suspension nécessaire à l'obtention d'un dépôt compact est obtenue grâce à l'ajout de stabilisants. Le stabilisant permet d'éviter la floculation des poudres et la formation d'agglomérats. Il peut agir par un effet électrostatique ou par un effet stérique. La stabilisation électrostatique est basée sur les interactions électrostatiques entre des charges et est obtenue par la distribution d'espèces chargées (ions) dans la solution. La stabilisation électrostatique est contrôlée par la concentration en ions ; elle peut par conséquent dépendre du pH. La stabilisation stérique met en oeuvre des polymères, tensio-actifs non ioniques voire des protéines, qui, ajoutés à la suspension, viennent s'absorber à la surface des particules pour causer la répulsion par encombrement de l'espace inter-particulaire. Une combinaison des deux mécanismes de stabilisation est également possible. Dans le cadre de la présente invention, on préfère la stabilisation électrostatique qui est facile à mettre en oeuvre, réversible, peu onéreuse, et qui facilite les processus ultérieurs de consolidation.

Dans un mode de réalisation particulier selon l'invention, les suspensions colloïdales de nanoparticules sont réalisées en l'absence de stabilisants. Ces suspensions ont été obtenues pour de faibles extraits secs, compris entre 2 g/L et 20 g/L, de préférence entre 3 et 10 g/L, et plus particulièrement pour des extraits secs de l'ordre de 4g/l, dans un solvant organique de type alcool et/ou cétone. Ces suspensions colloïdales stables de particules sans ajout de stabilisant sont particulièrement préférées dans le cadre de la présente invention.

Le potentiel Zêta de telles suspensions est généralement inférieur à 40 mV, et plus particulièrement compris entre 25 et 40 mV. Cela pourrait signifier que de telles suspensions tendent à être instables, cependant les inventeurs ont constaté que l'emploi de ces suspensions pour le dépôt électrophorétique conduisait à des films déposés très bonne qualité.

Lorsque l'eau est utilisée comme solvant, des tensions de dépôt inférieures à 5 V doivent être privilégiées, car au-dessus de 5 V l'eau risque de subir une électrolyse donnant lieu à des productions de gaz sur les électrodes qui rendent les dépôts poreux et diminuent leur adhérence sur le substrat. Par ailleurs, les réactions galvaniques en milieu aqueux donnent lieu à la formation de cations métalliques susceptibles de polluer les dépôts.

Dans un mode de réalisation préféré, les dépôts se font en phase solvantée. Il est ainsi possible de travailler à des valeurs de tension plus élevées, augmentant ainsi les vitesses de dépôts.

Selon l'invention, les nanoparticules utilisées pour la réalisation du film mince dense peuvent être choisies dans une liste très vaste, qui dépend en fait de l'utilisation prévue.

A titre d'exemple, pour préparer des films de cathode dans des batteries de type Li-ion, les nanoparticules peuvent être choisie parmi un ou plusieurs des matériaux suivants :

(i) les oxydes $LiMn_2O_4$, $LiCoO_2$, $LiNiO_2$, $LiMn_{15}Ni_{0,5}O_4$, $LiMn_{1,5}Ni_{0,5-x}X_{xO4}$ (où x est sélectionné parmi Al, Fe, Cr, Co, Rh, Nd, autres terres rares, et où $0 < x < 0,1$), $LiFeO_2$, $LiMn_{1/3}Ni_{1/3}Co_{1/3}O_4$;
(ii) les phosphates $LiFePO_4$, $LiMnPO_4$, $LiCoPO_4$, $LiNiPO_4$, $Li_3V_2(PO_4)_3$ ;
(iii) toutes les formes lithiées des chalcogénides suivants : $V_2O_5$, $V_3O_8$, $TiS_2$, $TiO_yS_z$, $WO_yS_z$, $CuS$, $CuS_2$.

Pour réaliser des films d'anode dans des batteries de type Li-ion, les nanoparticules peuvent être choisie parmi un ou plusieurs des matériaux suivants :

(i) les oxynitrures d'étain (de formule typique $SnO_xN_y$) ;

(ii) les oxynitrures mixtes de silicium et étain (de formule typique $Si_aSn_bO_yN_z$ avec a>0, b>0, a+b≤2, 0<y≤4, 0<z≤3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cO_yN_zX_n$ et $Si_aSn_bO_yN_zX_n$ avec Xn au moins un des éléments parmi F, Cl, Br, I, S, Se, Te, P, As, Sb, Bi, Ge, Pb ;

(iii) les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu) ;

(iv) les oxydes $SnO_2$, $Li_4Ti_5O_{12}$, $SnB_{0,6}P_{0,4}O_{2,9}$.

Pour la réalisation de l'anode ou de la cathode, on peut ajouter aux matériaux cités précédemment des nanoparticules de matériaux conducteurs électroniques, et en particulier de graphite et/ou conducteurs des ions lithium, comme par exemple les matériaux d'électrolyte solide décrit ci-après.

Pour préparer un film mince d'électrolyte dans une batterie Li-ion, sachant que ce film doit être un bon conducteur ionique mais un isolant électrique, les nanoparticules utilisées sont choisies avantageusement parmi un ou plusieurs des matériaux suivants :

(i) les composés lithiés à base d'oxynitrure de lithium et de phosphore (appelés LiPON) sous forme $Li_xPO_yN_z$ avec x ~2,8 et 2y+3z ~7,8 et 0,16 ≤ z ≤ 0,4, et en particulier le $Li_{2,9}PO_{3,3}N_{O,46}$, mais également toutes les variantes sous forme $Li_wPO_xN_yS_z$ avec 2x+3y+2z = 5=w et 3,2 ≤ x ≤ 3,8, 0,13 ≤ y ≤ 0,4, 0 ≤ z ≤ 0,2, 2,9 ≤ w ≤ 3,3 ou sous forme $Li_tP_xAl_yO_uN_vS_w$ avec 5x+3y=5, 2u+3v+2w=5+t, 2,9≤t≤3,3, 0,94≤x≤0,84, 0,094≤y≤0,26, 3,2≤u≤3,8, 0,13≤v≤0,46, 0≤w≤0,2 ;

(ii) les composé lithiés à base d'oxynitrure de lithium, de phosphore et de silicium (appelés LiSiPON), et en particulier le $Li_{1,9}Si_{0,28}P_{1,0}O_{1,1}N_{1,0}$ ;

(iii) les oxynitrures de lithium de types LiBON, LiBSO, LiSiPON, LiSON, thio-LiSiCON, LiPONB (ou B, P et S représentent respectivement le bore, le phosphore et le soufre);

(iv) les composés $La_{0,51}Li_{0,34}Ti_{2,94}$, $Li_{3,4}V_{0,4}Ge_{0,6}O_4$, $Li_2O$-$Nb_2O_5$, $LiAlGaSPO_4$ ;

(v) les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où 0 < x < 1), $Li_{1+x+y}Al_xTi_{2-x}Si_yP_{3-y}O_{12}$ (où 0≤x≤1 et 0≤y≤1), $Li_{1+x+z}M_x(Ge_{1-y}Ti_y)_{2-x}Si_zP_{3-z}O_{12}$ (où 0 ≤ x ≤0,8 ; 0 ≤ y ≤ 1,0 ; 0 ≤ z ≤ 0,6), et en particulier les formulations $4,9LiI$-$34,1Li_2O$-$61B_2O_3$, $0,30Li_2S$-$0,26B_2S_3$-$0,44LiI$, $60Li_2S$-$40SiS_2$, $0,02Li_3PO_4$-$0,98(Li_2S$-$SiS_2)$, $2(Li_{1,4}Ti_2Si_{0,4}P_{2,6}O_{12})$-$AlPO_4$, $0,7Li_2S$-$0,3P_2S_5$.

Ici (et d'une manière générale dans tous les dépôts où cela est utile) on peut ajouter des particules de polymères, et notamment des polymères appartenant aux familles suivantes : polyimide, PVDF, PEO (polyéthylène oxyde), polyméthacrylate, polysiloxane. Ces polymères pouvant être imprégnés de sels de lithium.

Pour déposer des couches magnétiques, les nanoparticules peuvent être choisies parmi un ou plusieurs des matériaux suivants : les alliages de NiFe avec par exemple du $Ni_{80}Fe_{20}$, les alliages FeCo, CoPt, FeCoNi.

Pour déposer des couches diélectriques, les nanoparticules peuvent être choisies parmi un ou plusieurs des matériaux suivants : $BaTiO_3$, SiN, polyimides, $CaCu_3Ti_4O_{12}$, $La_{(1-x)}Sr_xMnO_3$.

Une fois la composition chimique cible souhaitée définie, i.e. nature de la poudre ou des mélanges de poudres, les nanoparticules sont mises en solution dans une phase liquide appropriée. On peut ajouter un stabilisant afin d'obtenir une suspension dont le potentiel zêta est de préférence supérieur à 40 mV, et plus préférentiellement supérieur à 60 mV. Dans certains modes de réalisation particuliers selon l'invention, il n'est pas nécessaire de rajouter de stabilisants pour obtenir de suspensions de nanoparticules stables, et cela même si le potentiel zêta est inférieur à 40 mV.

A titre d'exemple les solvants utilisés peuvent être à base de cétone, d'alcool ou d'un mélange des deux.

Parmi les stabilisants stériques susceptibles d'être utilisés, on peut citer notamment le polyéthylène imine (PEI), l'acide polyacrylique (PAA), l'acide citrique, la nitrocellulose sous réserve qu'ils soient solubles dans le solvant organique choisi. Des stabilisations électrostatiques peuvent être réalisées par ajout d'iodure, par ajouts d'acides ou bases. L'acidification ou basification de la solution peut être réalisée par ajout de traces d'eau et d'acides lorsque la suspension est réalisée en phase solvantée.

La conductivité électrique de la suspension peut être contrôlée pour obtenir un gradient de potentiel important entre les deux électrodes, sans risque de claquage diélectrique. De préférence la conductivité de la suspension colloïdale est comprise entre 1 et 20 $\mu$S/cm. Des acides et bases fortes peuvent être ajoutés en faible quantité pour contrôler la conductivité de la suspension et charger les surfaces des particules.

Pour obtenir une suspension stable, avec des particules de tailles nanométriques sans agglomérats, il peut être nécessaire de réaliser une étape de broyage et/ou de dispersion des poudres, préalablement à la mise en suspension des nanoparticules, afin de désagglomérer les particules et éventuellement d'ajuster leur taille (pour obtenir une taille moyenne inférieure à 100 nm ou même inférieure à 30 nm) et de réduire la dispersion de taille. Des ultrasons peuvent également être mis en oeuvre pour aider à la désagglomération et à la mise en suspension des particules.

Les défauts créés dans les particules pendant les étapes de broyage dispersion, sont également susceptibles de diminuer la température de densification, au même titre que la réalisation de compressions mécaniques.

*Dépôt des couches*

Selon l'invention, la couche mince dense est déposée par voie électrophorétique. Le dépôt électrophorétique de particules se fait par l'application d'un champ électrique entre le substrat sur lequel est réalisé le dépôt et une contre-électrode, permettant de mettre les particules chargées de la suspension colloïdale en mouvement, et de les déposer sur le substrat. L'absence de liants déposés en surface avec les particules permet d'obtenir des dépôts très compacts. La compacité obtenue grâce au dépôt électrophorétique, et l'absence de composés organiques en grande quantité dans le dépôt permet de limiter voire d'éviter les risques de craquelures ou d'apparition d'autres défauts dans le dépôt pendant les étapes de séchage.

D'autre part, du fait que le dépôt obtenu par électrophorèse ne contient pas de liants, ou d'autres composés organiques, le procédé selon la présente invention ne nécessite pas d'étapes de brulage, ou d'évaporation de composés corrosifs ou nocifs. Or, l'accroissement des contraintes économiques et environnementales impose de réduire les rejets dans l'atmosphère, ainsi la présente invention répond bien à ces contraintes.

De plus la vitesse de dépôt peut être très élevée en fonction du champ électrique appliqué et de la mobilité électrophorétique des particules de la suspension. Pour une tension appliquée de 200 V, la vitesse de dépôt peut atteindre environ 10 $\mu$m/min.

Les inventeurs ont constaté que cette technique permet de réaliser des dépôts sur de très larges surfaces avec une excellente homogénéité (sous réserve que les concentrations en particules et champs électriques soient homogènes sur la surface du substrat). Elle se prête aussi bien à un procédé continu en bande, c'est-à-dire le substrat est avantageusement une bande ; pendant le dépôt par électrophorèse, la bande peut être avantageusement stationnaire par rapport à la phase liquide.

Le substrat peut être une feuille ou une bande présentant une surface suffisamment conductrice. A titre d'exemple, un feuillard de cuivre ou aluminium, d'une épaisseur qui peut être par exemple de 20 $\mu$m, peut être utilisé, ou une bande polymère présentant un dépôt de surface électriquement conducteur. Dans ce dernier cas, le fait que dans le procédé selon l'invention la densification thermique se fait à une température relativement basse, présente un intérêt particulier.

Le dépôt par électrophorèse peut être mis en oeuvre dans un procédé de type « batch » (statique) ou dans un procédé continu. Les figures 2a et 2b illustrent différents modes de réalisation de dépôts par électrophorèse.

Lors du dépôt électrophorétique, une alimentation stabilisée permet d'appliquer une tension entre le substrat conducteur et deux électrodes situées de part et autre de ce substrat. Cette tension peut être continue ou alternative. Un suivi précis des courants obtenus permet de suivre et de contrôler précisément les épaisseurs déposées. Lorsque les couches déposées sont isolantes, en fonction de leur épaisseur, elles peuvent affecter la valeur du champ électrique, aussi, dans ce cas, on privilégie un mode de dépôt en courant contrôlé. En fonction de la résistivité de l'interface, la valeur du champ électrique est modifiée.

La figure 2a montre de manière schématique une installation pour mettre en oeuvre le procédé selon l'invention. L'alimentation électrique située entre les contre-électrodes **43** et le substrat conducteur **44** n'est pas représentée. On applique un champ électrique entre les deux contre-électrodes **43** et le substrat **44** pour déposer des particules de la suspension colloïdale **42** sur les deux faces du substrat **44.**

Le bobineau de feuillard (bande) conducteur électrique **44** servant de substrat est déroulé à partir d'un dérouleur **41.** Après le dépôt la couche déposée est séchée dans un four de séchage **45** puis consolidé par compaction mécanique à l'aide d'un moyen de compaction **46** approprié. La compaction peut être réalisée sous atmosphère contrôlée et pour des températures comprises entre la température ambiante et la température de fusion des matériaux déposés.

La représentation de la figure 2a est intéressante pour la fabrication de dépôts de matériaux actifs sur des collecteurs de courant servant à réaliser des électrodes de batterie. Cependant, pour la réalisation de capacité multicouches ou de cellules photovoltaïque, il peut être plus avantageux de ne revêtir qu'une seule face du substrat. Aussi, la figure 2b représente un dispositif pour réaliser un revêtement sur une seule face conductrice, sans dispositif de densification mécanique.

Par ailleurs cette technique de dépôts permet un recouvrement parfait de la surface quelle que soit sa géométrie, la présence de défauts d'aspérité. Elle permet par conséquent de garantir les propriétés diélectriques du dépôt.

L'absence de contacts mécaniques permet de réaliser ces dépôts sur des surfaces extrêmement larges. En effet, avec des techniques de dépôts d'impression d'encre, il est difficile de garantir une parfaite homogénéité d'épaisseur sur des substrats larges, ce qui fait que lignes de revêtement sont souvent limitées en largeur. A titre d'exemple, lorsque l'on souhaite déposer des couches de batteries Li-ion de puissance, autrement dit des dépôts de fines épaisseurs, la largeur maximale de bande se situe aux alentours de 200 à 300 mm, ce qui limite fortement la capacité de production des lignes de revêtement selon l'état de la technique.

Lorsque des matériaux peu ou pas conducteurs électriques sont déposés sur la surface d'un substrat, les éventuelles zones moins bien revêtues, sont plus conductrices et concentrent ainsi localement une vitesse de dépôt plus importante qui tend à compenser voir effacer le défaut. Les dépôts obtenus sont ainsi intrinsèquement L'épaisseur de la couche déposée par électrophorèse peut varier entre quelques dizaines de $\mu$m et un dixième de $\mu$m, mais des couches plus épaisses ou moins épaisses sont accessibles. Cependant, on préfère que le dépôt électrophorétique obtenu à l'étape (c) ait une épaisseur inférieure à 10 $\mu$m, et de préférence inférieure à 5 $\mu$m ; cela est lié à la difficulté d'écraser une poudre nanométrique en couche épaisse par un moyen mécanique.

Le diagramme de la figure 3 présente un mode de réalisation typique du procédé selon l'invention :

1° étape: Préparation des suspensions. On utilise des poudres de la composition chimique du revêtement (de la couche mince) souhaitée.

2° étape : Immersion d'un substrat métallique dans la suspension colloïdale. La suspension colloïdale peut recouvrir la totalité de la surface du substrat. Dans un mode de réalisation particulier, un masque isolant peut être appliqué sur la surface du substrat de manière à limiter la surface en contact de la suspension et par voie de conséquence réduire la surface de dépôt.

3° étape : Application d'un champ électrique entre le substrat et une contre électrode située dans la suspension colloïdale. Ce champ électrique peut être constant et / ou variable (alternatif). Le sens moyen du champ électrique, c'est-à-dire du potentiel appliqué aux électrodes est adapté à la charge de la particule à déposer (cataphorèse ou anaphorèse).

4° étape : Les conditions de séchage dépendent de l'épaisseur déposée ainsi que de la nature du solvant.

5° étape : densification du dépôt.

Il est possible d'effectuer une étape de compactation mécanique sur la couche humide avant séchage, par exemple par calandrage ou compression statique ; cela peut permettre d'améliorer la qualité de la couche, mais ne remplace pas la densification à sec.

*Densification du dépôt*

Dans un mode de réalisation très avantageux, le procédé selon l'invention implique une densification mécanique sur couche sèche, suivi d'une densification thermique. Cette densification en deux étapes permet de minimiser les cavités, pores, fissures et autres défauts de compacité. Dans ce mode de réalisation très avantageux, un aspect essentiel du procédé selon l'invention est la densification mécanique de la couche sèche. En effet, la compactation mécanique de la couche humide, connue de l'état de la technique (voir US 7,790,067), conduit à des couches nanoporeuses : elle permet probablement de combler des cavités de grande dimension (et, à ce titre, peut être utilement ajoutée au procédé selon la présente invention, comme sera expliqué ci-dessous), mais compte tenu du fait que le liquide reste emprisonné entre les grains constituant la poudre, ne permet pas une déformation efficace des grains : ainsi, la compactation humide conduit à des couches nanoporeuses qui sont utiles comme électrodes dans les cellules solaires de type DSSC (Dye Sensitized Solar Cells), tel que décrit dans le brevet US 7,790,067 précité, mais elle ne permet pas d'obtenir des couches denses présentant une porosité de moins de 20%, et de préférence de moins de 10% à l'instar du procédé selon l'invention. En effet, les inventeurs pensent, sans vouloir être lié par cette théorie qui permet expliquer leurs observations, que la densification à sec permet de déformer les grains pour combler en grande partie les pores intergranulaires, et pour emmagasiner suffisamment d'énergie à l'intérieur des grains nanométriques de la couche pour que la densification thermique, qui est une autre étape essentielle du procédé selon l'invention, permette la formation d'une couche mince dense à une température relativement basse.

Ainsi, après le dépôt de la couche par électrophorèse et avantageusement avant l'étape de densification par traitement thermique, on effectue l' étape de densification mécanique afin de compacter davantage les particules et induire des déformations des particules qui faciliteront encore plus la densification ultérieure. Ensuite, on doit effectuer une densification thermique.

La densification mécanique peut être réalisée par tout moyen mécanique approprié, et en particulier par compression, par calandrage, par compression isostatique ou par choc. La densification thermique (et, dans une variante, également la densification mécanique) est effectuée de préférence sous atmosphère contrôlée, c'est-à-dire sous vide ou sous gaz inerte, afin d'éviter l'oxydation ou pollution du revêtement ; une telle pollution pourraient nuire au mécanisme de densification des particules entre-elles. La température du traitement thermique dépend fortement de la composition chimique des poudres déposées.

On peut également effectuer les deux traitements en même temps, en particulier par traitement thermique sous pression.

On peut également effectuer l'étape de densification mécanique après l'étape de densification thermique.

Dans un mode de réalisation particulier selon l'invention, la pression appliquée lors de l'étape de densification mécanique peut être comprise entre 10 et 100 MPa, de préférence entre 10 et 50 MPa, et encore plus préférentiellement entre 15 et 35 MPa. En effet, les inventeurs ont découvert que pour des suspensions de nanoparticules stables en solution à de faibles concentrations, l'étape de densification mécanique peut être réalisée à de faibles pressions mécaniques (quelques dizaines de MPa) pour consolider la couche déposée par électrophorèse. Le procédé selon l'invention, comportant une densification mécanique qui est effectuée préalablement ou en même temps a une densification thermique, permet de réduire la durée et la température des traitements thermiques et de limiter le retreint de ces traitements, et d'obtenir une structure nanocristalline homogène. Ceci contribue à l'obtention de couches denses et compactes sans défauts.

Les inventeurs ont constaté que plus la taille des particules déposées diminue, plus la température du traitement thermique peut être diminuée. Il est ainsi possible de réaliser des dépôts en couches minces, ou relativement épaisses, avec des taux de porosité inférieure à 10%, de préférence inférieur à 5% voire 2%, sans avoir recours à des températures et/ou durées de traitement thermiques importants.

Sans vouloir être lié par cette théorie qui permet d'expliquer leurs observations, les inventeurs pensent que pour des tailles de particules telles que celles utilisées dans le procédé selon l'invention, c'est l'augmentation des énergies de surface qui devient la principale force motrice de la densification par traitement thermique; cela se traduit par une forte baisse des températures de densification lorsque la taille des particules diminue. Cependant, pour que cette réduction des températures de consolidation soit effective, il est nécessaire que les particules soient au préalable compactées mécanique, et/ou déposées avec un empilement compact. C'est la multiplication des contacts mécaniques entre ces particules permet de faciliter les processus diffusionnels à l'origine de la densification. Aussi, pour compacter les dépôts, on effectue par exemple un pressage (calandrage). Cette technique de compaction par pressage (calandrage) est bien adaptée aux dépôts constitués de particules de tailles microniques ou supérieures. En effet, le compactage mécanique de nanoparticules est beaucoup plus difficile à réaliser que celui de particules de tailles micrométriques, et nécessite des pressions très élevées. Le nombre de contacts entre particules augmente avec la diminution de leurs tailles, ce qui se traduit par un frottement qui dissipe l'essentiel des efforts de compression.

La présence d'agglomérats, de cavités inter-agglomérats influence également la densification. Plus leurs tailles augmentent, plus la distance de diffusion augmente et plus la température de densification est élevée pour obtenir une bonne densification.

Ainsi, avec des nanoparticules déposées par électrophorèse on peut s'approcher de la densité théorique géométrique d'un empilement cubique à faces centrées (68%) voire d'un empilement hexagonal compact (74%) sans étape de compaction mécanique.

Un tel résultat n'est pas possible par les techniques d'encrage. Le dépôt de nanoparticules par ces techniques est très difficile en couche mince car la diminution de la taille des particules conduit à l'augmentation de la viscosité des suspensions. Il faut alors diminuer l'extrait sec en augmentant la proportion de solvant ; on observe alors que l'élimination d'une grande quantité de solvant des couches crues induit des pores et cavités.

La forte compacité du dépôt obtenu par électrophorèse, et la faible quantité de solvant à évaporer limite très sensiblement le risque d'apparition de fissures après séchage. Par ailleurs, la faible taille des particules, leur grande surface spécifique tend à faciliter les étapes de consolidation par un traitement thermique (appelé parfois dans ce contexte : « frittage »). La densification du dépôt peut ainsi être réalisée à des températures proches de ou inférieures à $0,7\,T_f$, de préférence ne dépassant pas $0,5T_f$, voire $0,3T_f$, où $T_f$ est la température de fusion (exprimée en °C) du matériau massif le plus fusible de composition chimique identique à celle de la particule déposée. Le terme « température de fusion » englobe ici la température de décomposition pour le cas des substances qui n'ont pas de point de fusion. Avec une densification mécanique efficace, on peut accroitre davantage la compacité du dépôt et créer des défauts ponctuels qui vont contribuer à accélérer le processus de densification thermique, et cela à des températures encore plus faibles, pour conduire à des couches minces denses exemptes de porosités.

Un tel procédé de fabrication de couches minces peut être utilisé directement sur des substrats comme des feuillards en aluminium, ayant de faibles températures de fusion, ou sur des feuilles de polymère métallisées.

Les nanoparticules étant très sensibles à la pollution de surface, il est préférable de réaliser la densification thermique, et éventuellement aussi la densification mécanique, sous atmosphère contrôlée, c'est-à-dire sous vide ou sous atmosphère inerte.

L'électrophorèse, de préférence réalisée avec des nanoparticules monodispersées à partir de suspensions colloïdales stables, permet de déposer des couches très denses. Ainsi, une telle couche ne présente quasiment aucun retreint lors de la densification thermique et donc peu ou pas de défauts, même lorsqu'ils sont réalisés sur de larges surfaces et fortes épaisseurs. Par ailleurs, cette densification thermique se fera d'autant plus facilement à faible température, pour des temps courts, que le film de départ sera compact et aura été réalisé avec des nanoparticules de faibles dimensions. Pour accroitre davantage la compacité avant densification thermique, il est avantageux d'utiliser des nanoparticules de très faibles dimensions (<30 nm) et/ou de formes parallélépipédiques.

On peut également utiliser des poudres de nanoparticules présentant une distribution de taille bi-modale, de manière à ce que les particules les plus petites s'insèrent dans les interstices entre les particules le plus grandes.

L'invention a de nombreux avantages.

Le procédé selon l'invention permet de réaliser des couches minces à basse température. Elles peuvent recouvrir aussi la tranche d'éventuelles couches déjà présentes sur le substrat. L'électrophorèse permet de déposer des couches de compositions difficiles voire impossibles à obtenir par voie sous vide ; par exemple, on peut incorporer des polymères dans une phase minérale, ou déposer des composés de type spinelle (LiMn$_2$O$_4$) ou olivine (LiFePO$_4$) difficilement accessibles par dépôt sous vide.

Le procédé de fabrication de couches minces denses par électrophorèse suivi d'une densification thermique à température modérée, éventuellement précédé d'une densification mécanique, est simple, rapide, peu onéreux. La surface sur laquelle le dépôt a lieu peut être délimitée facilement à l'aide de masques électriquement isolants, et contrairement aux techniques de dépôt sous vide et techniques d'encrage, il n'y a pas de dépôt sur ces masques. D'une manière générale, la vitesse de dépôt est élevée, les matières premières sont utilisées en totalité. Les masques peuvent être réutilisés sans décapage du dépôt parasite.

La taille des grains peut être beaucoup plus faible que dans les films déposés par des encres, car la couche de nanoparticules déposées par électrophorèse est consolidée à basse température. Compte tenu de la densification à température relativement basse, les couches peuvent incorporer des polymères.

Le procédé selon l'invention se prête bien à la fabrication de couches minces destinées à être utilisées dans des dispositifs électriques, électrotechniques ou électroniques.

A titre d'exemple, il permet la fabrication de batteries de type Li-ion. Pour cette application, il procure deux avantages essentiels. D'une part, le procédé est fortement simplifié, car il n'implique pas l'utilisation de sels de lithium ou de lithium métallique, très sensibles à l'humidité. D'autre part, les batteries obtenues présentent une forte densité de puissance, lorsque les électrodes sont minces ; elles présentent également une forte densité d'énergie (environ deux fois plus que les batteries à ions de lithium connues) dû au très faible taux de porosité. L'absence de sels de lithium corrosifs améliore la durée de vie de la batterie, diminue le risque de court-circuit interne et améliore également sa résistance à la température ; de ce fait, les batteries selon l'invention peuvent subir une opération de soudage à la vague. Ainsi, ces batteries présentent un bon niveau de sécurité. Par ailleurs, leur taux d'autodécharge est plus faible, car la couche d'électrolyte recouvre les bords des électrodes.

Exemples de synthèses de nanoparticules, de mise en suspension des nanoparticules, et de réalisation de couches minces denses

1. Synthèses de nanoparticules

a) LiMn$_2$O$_4$

On a synthétisé une poudre de LiMn$_2$O$_4$ constituée d'amas de nanoparticules selon la méthode de Pechini décrite dans l'article « Synthesis and Electrochemical Studies of Spinel Phase LiMn2O4 Cathode Materials Prepared by the Pechini Process », W. Liu, G.C. Farrington, F. Chaput, B. Dunn, J. Electrochem. Soc., vol.143, No.3, 1996. Après l'étape de calcination à 600°C, la poudre contient des amas dont la taille est comprise entre 50 nm et 100 nm. Ces nanoparticules peuvent être utilisées pour préparer des films de cathode dans des batteries de type Li-ion.

b) Li$_4$Ti$_5$O$_{12}$

On a synthétisé une poudre de Li$_4$Ti$_5$O$_{12}$ constituée d'amas de particules de taille nanométrique selon le procédé décrit dans l'article « Phase-pure nanocrystalline Li4Ti5O12 for a lithium-ion battery » de M. Kalbac, M. Zukalova, L. Kavan, J Solid State Elecrtochem (2003) 8 : 2-6. La synthèse s'effectue par mélange sous argon d'une solution de LiOEt à 0,9M et de Butoxyde de Titane(IV) dans l'éthanol. Le mélange est réalisé avec le rapport stoechiométrique du Li/Ti = 4:5. La solution obtenue est par la suite hydrolysée avec une solution aqueuse à 4% de polyéthylène glycol. Le mélange est ensuite mélangé pendant 11 heures avant d'être évaporé à 40°C jusqu'à obtenir une pâte visqueuse. Après calcination à 500°C, une poudre de Li$_4$Ti$_5$O$_{12}$ est obtenue. Ces nanoparticules peuvent être utilisées pour préparer des films d'anode dans des batteries de type Li-ion.

C) $Li_{1,3}Al_{0,3}Ti_{1,7}(PO_4)_3$

On a synthétisé tout d'abord des poudres nanométriques du $Li_{1,3}Al_{0,3}Ti_{1,7}(PO_4)_3$ en utilisant le procédé décrit dans la publication « Thin-film lithium-ion battery derived from Li1,3Al0,3Ti1,7(PO4)3 sintered pellets » par Xiao et al, paru dans Trans. Nonferrous Me. Soc. China 16 (2006), p. 281-285. On dissout en quantité stoechiométrique le $Li(CH_3-COO).2H_2O$ et $Al(NO_3)_3.9H_2O$ dans $CH_3OCH_2CH_2OH$, puis on ajoute à ce mélange sous agitation $PO(OC_4H_9)_4$. Après avoir ajouté la quantité stoechiométrique d'eau déminéralisée pour l'hydrolyse des alkoxydes, la suspension obtenue est séchée à 140°C pendant 4 heures pour former un gel de $Li_{1,3}Al_{0,3}Ti_{1,7}(PO_4)_3$. Ce gel est par la suite calciné à 900°C pendant 2 heures et pour obtenir une poudre agglomérée de $Li_{1,3}Al_{0,3}Ti_{1,7}(PO_4)_3$. Ces nanoparticules peuvent être utilisées pour préparer des films d'électrolyte dans des batteries de type Li-ion.

d) $LiMn_{1,5}Ni_{0,4}Cr_{0,1}O_4$

On dissout une poudre de $Li_2CO_3$ par petite quantité dans un mélange d'acide citrique et d'éthylène glycol chauffée à 70°C. On observe un dégagement de $CO_2$ à chaque portion additionnée. La température du mélange est portée à 90°C, puis on ajoute ensuite en quantité stoechiométrique du $Mn(NO_3)_2.4H_2O$, du $Ni(NO_3)_2.6H_2O$ et du $Cr(NO_3)_2.9H_2O$ à cette dernière solution puis on augmente la température du mélange à 140°C jusqu'à obtention d'une masse dure bullée. Cette dernière est ensuite passée à l'étuve à 250°C jusqu'à obtention d'une poudre. La poudre obtenue est enfin calcinée à 800°C pendant 6h. La poudre obtenue peut être utilisé pour préparer des films de cathode dans des batteries de type Li-ion.

e) $LiMnPO_4$

On broie dans un mortier une poudre de $Li_3PO_4$ et une poudre $MnSO_4.4H_2O$ en quantité stoechiométrique. La poudre broyée obtenue est placée dans un autoclave à 190°C pendant 12h. Le produit obtenu est lavé, centrifugé puis séché à 40°C pendant une nuit. La poudre obtenue peut être utilisé pour préparer des films de cathode dans des batteries de type Li-ion.

f) $LiFePO_4$

On broie dans un mortier une poudre $Li_3PO_4$ et une poudre $FeSO_4.7H_2O$ en quantité stoechiométrique. La poudre broyée obtenue est placée dans un autoclave à 190°C pendant 12h. Le produit obtenu est lavé, centrifugé puis séchée à 40°C pendant une nuit. La poudre obtenue peut être utilisé pour préparer des films de cathode dans des batteries de type Li-ion.

g) $Li_{2,9}PO_{3,3}N_{0,36}/Li_{2,9}PO_{3,3}N_{0,46}$ (LIPON)

On place une poudre nanométrique de $Li_3PO_4$ non traitée thermiquement à haute température dans une nacelle en alumine placé dans un four tubulaire. La poudre est ensuite traitée thermiquement à 650°C pendant 2h sous atmosphère d'ammoniac. La poudre ainsi obtenue peut être utilisé pour préparer des films d'électrolyte dans des batteries de type Li-ion.

2. Dépôt d'une couche mince dense de $LiMn_2O_4$

Une poudre de $LiMn_2O_4$ est mise en suspension dans de l'éthanol avec une concentration égale à 20 g/l.
La suspension est introduite dans le bol d'un broyeur à billes préalablement rempli de billes en céramiques de diamètre 0,1 mm. Le broyage pendant 2 heures en présence d'acide polyacrylique, qui sert d'agent complexant, permet d'obtenir une solution colloïdale présentant des particules ($D_{50}$) dont la taille est égale à 30 nm. Le potentiel zêta de la suspension s'élève à environ 65 mV.
Les particules de $LiMn_2O_4$ contenues dans la suspension sont par la suite déposées sur un substrat constitué d'une feuille de cuivre de 100 $\mu$m d'épaisseur. Le dépôt est réalisé en appliquant entre le substrat et une contre-électrode, tous deux immergés dans la suspension colloïdale, une tension de 100 V jusqu'à obtenir un dépôt de 4 $\mu$m d'épaisseur. Ce dépôt est ensuite compacté sous une pression de 500 MPa, séché pendant 1 heure à 90°C avant d'être densifié par un traitement thermique de 500°C, réalisé pendant 1 heure. Le dépôt ainsi obtenu présente une porosité inférieure à 10%
Cette couche mince dense peut être utilisée comme cathode dans une batterie Li-ion.

### 3. Dépôt d'une couche mince dense de $Li_4Ti_5O_{12}$

**1ère méthode : par réalisation d'une solution colloïdale de $Li_4Ti_5O_{12}$ avec ajout de stabilisant**

Une poudre de $Li_4Ti_5O_{12}$ est mise en suspension dans de l'éthanol avec une concentration égale à 20 g/l. La suspension est introduite dans le bol d'un broyeur à billes préalablement rempli de billes en céramiques de diamètre 0,1 mm. Le broyage pendant 3 heures en présence de quelques millilitres d'acide polyacrylique, qui sert d'agent complexant, permet d'obtenir une solution colloïdale présentant des particules dont la taille ($D_{50}$) est égale à environ 40 nm. Le potentiel zêta de la suspension est égal à 60 mV.

Les particules de $Li_4Ti_5O_{12}$ contenues dans la suspension sont par la suite déposées sur un substrat constitué d'une feuille de cuivre de 100 $\mu$m d'épaisseur. Le dépôt est réalisé en appliquant entre le substrat et une contre-électrode, tous deux immergés dans la suspension colloïdale, une tension de 200 V jusqu'à obtenir un dépôt de 4 $\mu$m d'épaisseur. Ce dépôt est ensuite compacté sous une pression de 500 MPa, séché pendant 1 heure à 90°C avant d'être densifié par un traitement thermique à 450°C, réalisé pendant 2 heures. Le dépôt ainsi obtenu présente une porosité inférieure à 10%. Cette couche mince dense peut être utilisée comme anode dans une batterie Li-ion.

**2ème méthode : par réalisation d'une solution colloïdale de $Li_4Ti_5O_{12}$ sans ajout de stabilisant**

Une poudre de $Li_4Ti_5O_{12}$ est mise en suspension dans de l'éthanol avec une concentration d'environ 10 g/l. La suspension est introduite dans le bol d'un broyeur à billes préalablement rempli de billes en céramiques de diamètre 0,1 mm. Après l'étape de broyage-dispersion, la suspension obtenue est passée aux ultrasons puis et laissée décantée. Le surnageant de la suspension après décantation est prélevée. La taille ($D_{50}$) des particules de la solution colloïdale est égale à environ 58 nm. Le potentiel zêta de la suspension est égal à 30 mV.

L'électrode de $Li_4Ti_5O_{12}$ a été déposée en couche mince par éléctrophorèse des nanoparticules directement sur un feuillard d'aluminium électro polie. Les conditions de dépôts étaient de 10V/cm. Le dépôt compact obtenu comprend une épaisseur d'environ 0,5 $\mu$m. Le dépôt a été recuit à 500°C pendant 1 heure puis pressé sous 50 MPa. La figure 5 représente la courbe de voltampérométrie cyclique à 0,1 V/sec de l'électrode ainsi obtenue. Cette électrode est entièrement solide et adhère sur le substrat sans avoir ajouter de liants dans le dépôt.

### 3 - Dépôt d'une couche mince dense de $Li_{1,3}Al_{0,3}Ti_{1,7}(PO_4)_3$ par réalisation d'une solution colloïdale de $Li_{1,3}Al_{0,3}Ti_{1,7}(PO_4)_3$ avec ajout de stabilisant

Une poudre de $Li_{1,3}Al_{0,3}Ti_{1,7}(PO_4)_3$ est mise en suspension dans de l'éthanol et avec une concentration de 20 g/l.

La suspension est introduite dans le bol d'un broyeur à billes préalablement rempli de billes en céramiques de diamètre 0,1 mm. Le broyage pendant 3 heures en présence de quelques millilitres d'acide polyacrylique, qui sert d'agent complexant, permet d'obtenir une solution colloïdale présentant des particules dont la taille $D_{50}$ est égale à 15 nm. Le potentiel zêta de la suspension est de l'ordre de 60 mV.

Les particules de $Li_{1,3}Al_{0,3}Ti_{1,7}(PO_4)_3$ obtenues dans la suspension sont par la suite déposées sur un substrat constitué d'une feuille en cuivre de 100 $\mu$m d'épaisseur, en appliquant entre le substrat et un contre-électrode, tous deux immergés dans la suspension colloïdale, une tension de 100 V jusqu'à obtenir un dépôt de 2 $\mu$m d'épaisseur. Ce dépôt a été ensuite séché pendant 1 heure à 90°C, puis compacté sous une pression de 400 MPa avant d'être densifié par un traitement thermique sous vide à 300°C pendant 30 minutes. Le dépôt ainsi réalisé présente une porosité inférieure à 10%. Cette couche mince dense peut être utilisée comme électrolyte solide dans une batterie Li-ion.

### 4 - Réalisation d'une solution colloïdale de $Li_{1,3}Al_{0,3}Ti_{1,7}(PO_4)_3$ sans ajout de stabilisant

Une poudre de $Li_{1,3}Al_{0,3}Ti_{1,7}(PO_4)_3$ est mise en suspension dans de l'éthanol et avec une concentration de 10 g/l. La suspension est introduite dans le bol d'un broyeur à billes préalablement rempli de billes en céramiques de diamètre 0,1 mm. Le broyage est réalisé pendant 100 minutes et permet d'obtenir une solution colloïdale présentant des particules dont la taille $D_{50}$ est égale à 30 nm. Le potentiel zêta de la suspension est égal à 40 mV en valeur absolue.

## Revendications

**1.** Procédé de dépôt d'une couche mince, dense, présentant une porosité inférieure à 20% et comportant au moins un matériau Px sur un substrat, dans lequel :

    a) on approvisionne une suspension colloïdale comportant des nanoparticules d'au moins un matériau Px, le

diamètre $D_{50}$ desdites nanoparticules d'au moins un matériau Px étant inférieur à 100 nm, de préférence inférieur à 30 nm et encore plus préférentiellement inférieur à 10 nm,

b) on immerge ledit substrat dans ladite suspension colloïdale, conjointement avec une contre-électrode,

c) on applique une tension électrique entre ledit substrat et ladite contre-électrode de manière à obtenir le dépôt électrophorétique d'une couche compacte comportant des nanoparticules dudit au moins un matériau Px sur ledit substrat,

d) on sèche ladite couche compacte,

e) on procède à une densification mécanique de ladite couche,

f) on procède à une densification thermique à une température $T_R$ qui ne dépasse pas 0,7 fois, et de préférence ne dépasse pas 0,5 fois, voire 0,3 fois la température de fusion ou de décomposition (exprimée en °C) du matériau Px le plus fusible, préférentiellement à une température comprise entre 160°C et 600°C, et encore plus préférentiellement à une température comprise entre 160°C et 400°C,

sachant que les étapes (e) et (f) peuvent être effectuées simultanément, ou peuvent être inversées.

2. Procédé selon la revendication 1, dans lequel le dépôt électrophorétique obtenu à l'étape (c) a une épaisseur inférieure à 10 μm, et de préférence inférieure à 5 μm.

3. Procédé selon la revendication 1 ou 2, dans lequel ladite solution colloïdale comporte des nanoparticules de plusieurs matériaux (appelés $Px_1$, $Px_2$, ...) différents.

4. Procédé selon l'une quelconque des revendications 1 à 3, dans lequel ladite solution colloïdale comporte en plus des particules d'au moins un matériau Mx, lesdites particules pouvant être des nanoparticules ou non.

5. Procédé selon l'une quelconque des revendications 1 à 4, dans lequel ladite suspension colloïdale présente un potentiel zêta supérieur à 40 mV, et de préférence supérieur à 60 mV, exprimé en valeur absolue.

6. Procédé selon l'une quelconque des revendications 1 à 5, dans lequel ladite suspension colloïdale contient un stabilisant stérique ou électrostatique.

7. Procédé selon l'une quelconque des revendications 1 à 5, dans lequel ladite suspension colloïdale ne contient pas de stabilisant stérique ou électrostatique.

8. Procédé selon l'une quelconque des revendications 1 à 7, dans lequel la densification mécanique est réalisée à des pressions comprises entre 10 et 100 MPa, de préférence entre 10 et 50 MPa, et encore plus préférentiellement entre 15 et 35 MPa.

9. Procédé selon l'une quelconque des revendications 1 à 8, dans lequel la couche mince, dense obtenue présentant une porosité inférieure à 20%, présente une porosité inférieure à 10%, de préférence inférieure à 5%.

10. Procédé selon l'une quelconque des revendications 1 à 9, dans lequel ladite étape de densification thermique est réalisée sous vide.

11. Procédé selon l'une quelconque des revendications 1 à 10 pour préparer des films de cathode dans les batteries de type Li-ion, **caractérisé en ce que** les particules Px peuvent être choisies parmi un ou plusieurs des matériaux Mx suivants :

(i) les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ (où x est sélectionné parmi Al, Fe, Cr, Co, Rh, Nd, autres terres rares, et où $0 < x < 0,1$), $LiFeO_2$, $LiMn_{1/3}Ni_{1/3}Co_{1/3}O_4$;

(ii) les phosphates $LiFePO_4$, $LiMnPO_4$, $LiCoPO_4$, $LiNiPO_4$, $Li_3V_2(PO_4)_3$,

(iii) toutes les formes lithiées des chalcogénides suivants : $V_2O_5$, $V_3O_8$, $TiS_2$, $TiO_yS_z$, $WO_yS_z$, $CuS$, $CuS_2$.

12. Procédé selon l'une quelconque des revendications 1 à 10 pour préparer des films d'anode dans les batteries de type Li-ion, **caractérisé en ce que** les particules Px peuvent être choisies parmi un ou plusieurs des matériaux Mx suivants

(i) les oxynitrures d'étain (de formule typique $SnO_xN_y$) ;

(ii) les oxynitrures mixtes de silicium et étain (de formule typique $Si_aSn_bO_yN_z$ avec a>0, b>0, a+b≤2, 0<y≤4, 0<z≤3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y24, 0<z<17; $Si_aSn_bC_cO_yN_zX_n$ et $Si_aSn_bO_yN_zX_n$ avec Xn au moins un des éléments parmi F, Cl, Br, I, S, Se, Te, P, As, Sb, Bi, Ge, Pb ;
(iii) les oxydes $SnO_2$, $Li_4Ti_5O_{12}$, $SnB_{0,6}P_{0,4}O_{2,9}$.

13. Procédé selon l'une quelconque des revendications 1 à 10 pour préparer un film mince d'électrolyte dans une batterie Li-ion, **caractérisé en ce que** les particules Px sont choisies avantageusement parmi un ou plusieurs des matériaux Mx suivants :

(i) les composés lithiés à base d'oxynitrure de lithium et de phosphore (appelés LiPON) sous forme $Li_xPO_yN_z$ avec x ~2,8 et 2y+3z ~7,8 et 0,16 ≤ z ≤ 0,4, et en particulier le $Li_{2,9}PO_{3,3}N_{0,46}$, mais également toutes les variantes sous forme $Li_wPO_xN_yS_z$ avec 2x+3y+2z = 5=w et 3,2 ≤ x ≤ 3,8, 0,13 ≤ y ≤ 0,4, 0 ≤ z ≤ 0,2, 2,9 ≤ w ≤ 3,3 ou sous forme $Li_tP_xAl_yO_uN_vS_w$ avec 5x+3y=5, 2u+3v+2w=5+t, 2,9≤t≤3,3, 0,94≤x≤0,84, 0,094≤y≤0,26, 3,2≤u≤3,8, 0,13≤v≤0,46, 0≤w≤0,2 ;
(ii) les composé lithiés à base d'oxynitrure de lithium, de phosphore et de silicium (appelés LiSiPON), et en particulier le $Li_{1,9}Si_{0,28}P_{1,0}O_{1,1}N_{1,0}$ ;
(iii) les oxynitrures de lithium de types LiBON, LiBSO, LiSiPON, LiSON, thio-LiSiCON, LiPONB (ou B, P et S représentent respectivement le bore, le phosphore et le soufre);
(iv) les composés $La_{0,51}Li_{0,34}Ti_{2,94}$, $Li_{3,4}V_{0,4}Ge_{0,6}O_4$, $Li_2O-Nb_2O_5$, $LiAlGaSPO_4$ ;
(v) les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où 0 < x < 1), $Li_{1+x+y}Al_xTi_{2-x}Si_yP_{3-y}O_{12}$ (où 0≤x≤1 et 0≤y≤1), $Li_{i+x+z}M_x(Ge_{1-y}Ti_y)_{2-x}Si_zP_{3-z}O_{12}$ (où 0 ≤ x ≤0,8 ; 0 ≤ y ≤ 1,0 ; 0 ≤ z ≤ 0,6), et en particulier les formulations 4,9LiI-34, $1Li_2O-61B_2O_3$, $0,30Li_2S-0,26B_2S_3-0,44LiI$, $60Li_2S-40SiS_2$, $0,02Li_3PO_4-0,98(Li_2S-SiS_2)$, $2(Li_{1,4}Ti_2Si_{0,4}P_{2,6}O_{12})-AlPO_4$, $0,7Li_2S-0,3P_2S_5$.

14. Utilisation d'un procédé selon l'une quelconque des revendications 1 à 13 pour la fabrication de couches minces, et notamment de couches diélectriques, magnétiques, ferroélectriques, piézoélectriques, optiques ou de couches d'électrode, dans des dispositifs électroniques, électriques ou électrotechniques, et de préférence dans des dispositifs sélectionnés dans le groupe formé par : les batteries, les capacités, les résistances, les inductances, les transistors, les cellules photovoltaïques.

## Patentansprüche

1. Verfahren zum Abscheiden eines dichten dünnen Films, dessen Porosität geringer als 20% ist, umfassend mindestens ein Material Px auf einem Substrat, in dem :

a) eine kolloidale Suspension enthaltend Nanopartikel aus mindestens einem Material Px zugeführt wird, wobei der Durchmesser D50 der Nanopartikel von mindestens einem der Materialien Px weniger als 100 nm, vorzugsweise weniger als 30 nm und noch mehr bevorzugt weniger als 10 nm beträgt,
b) das Substrat zusammen mit einer Gegenelektrode in die kolloidale Suspension eingetaucht wird,
c) eine elektrische Spannung zwischen dem genannten Substrat und der genannten Gegenelektrode angelegt wird, um die elektrophoretische Abscheidung einer kompakten Schicht zu erhalten, die Nanopartikel des genannten mindestens einen Materials Px auf dem genannten Substrat umfasst,
d) die genannte kompakte Schicht getrocknet wird,
e) eine mechanische Verdichtung der genannten Schicht durchgeführt wird,
f) eine thermische Verdichtung bei einer Temperatur TR durchgeführt wird, die das 0,7-fache, vorzugsweise das 0,5-fache oder das 0,3-fache der Schmelz- oder Zersetzungstemperatur (ausgedrückt in °C) des am meisten schmelzbaren Materials Px nicht übersteigt, und vorzugsweise bei einer Temperatur zwischen 160 °C und 600 °C, und noch bevorzugter bei einer Temperatur zwischen 160 °C und 400 °C,

wobei die Schritte (e) und (f) gleichzeitig durchgeführt werden können oder in umgekehrter Reihenfolge duchgeführt werden können.

2. Verfahren nach Anspruch 1, wobei die in Schritt (c) erhaltene elektrophoretische Abscheidung eine Dicke von weniger als 10 µm und vorzugsweise weniger als 5 µm aufweist.

3. Verfahren nach Anspruch 1 oder 2, wobei die genannte kolloidale Suspension Nanopartikel unterschiedlicher Materialien (Px1, Px2, ...) umfasst.

4. Verfahren nach einem der Ansprüche 1 bis 3, wobei die genannte kolloidale Lösung ferner Partikel von mindestens einem Mx-Material umfasst, wobei die Partikel möglicherweise Nanopartikel sind oder nicht.

5. Verfahren nach einem der Ansprüche 1 bis 4, wobei die genannte kolloidale Suspension ein Zeta-Potential von mehr als 40 mV und vorzugsweise mehr als 60 mV, ausgedrückt als absoluter Wert, aufweist.

6. Verfahren nach einem der Ansprüche 1 bis 5, wobei die genannte kolloidale Suspension einen sterischen oder elektrostatischen Stabilisator enthält.

7. Verfahren nach einem der Ansprüche 1 bis 5, wobei die genannte kolloidale Suspension keinen sterischen oder elektrostatischen Stabilisator enthält.

8. Verfahren nach einem der Ansprüche 1 bis 7, bei dem die mechanische Verdichtung bei Drücken zwischen 10 und 100 MPa, vorzugsweise zwischen 10 und 50 MPa und noch bevorzugter zwischen 15 und 35 MPa durchgeführt wird.

9. Verfahren nach einem der Ansprüche 1 bis 8, bei dem der erhaltene dichte dünne Film mit einer Porosität von weniger als 20% eine Porosität von weniger als 10% und vorzugsweise von weniger als 5% aufweist.

10. Verfahren nach einem der Ansprüche 1 bis 9, wobei der thermische Verdichtungsschritt unter Vakuum durchgeführt wird.

11. Verfahren nach einem der Ansprüche 1 bis 10 zur Herstellung von Kathodenfilmen in Li-Ionen-Batterien, **dadurch gekennzeichnet, daß** die Teilchen Px aus einem oder mehreren der folgenden Mx-Materialien ausgewählt werden können:

i) den Oxyden $LiMn_2O_4$, $LiCoO_2$, $LiNiO_2$, $LiMn_{1,5}Ni_{0,5}O_4$, $LiMn_{1,5}Ni_{0,5-x}X_xO_4$ (wobei x ausgewählt wird aus Al, Fe, Cr, Co, Rh, Nd, anderen seltenen Erden, und wobei $0 < x < 0.1$), $LiFeO_2$, $LiMn_{1/3}Ni_{1/3}Co_{1/3}O_4$;
ii) den Phosphaten $LiFePO_4$, $LiMnPO_4$, $LiCoPO_4$, $LiNiPO_4$, $Li_3V_2(PO_4)_3$;
iii) allen lithiierten Formen der folgenden Chalcogenides $V_2O_5$, $V_3O_8$, $TiS_2$, $TiO_yS_z$, $WO_yS_z$, $CuS$, $CuS_2$.

12. Verfahren nach einem der Ansprüche 1 bis 10 zur Herstellung von Anodenfilmen in Li-Ionen-Batterien, **dadurch gekennzeichnet, dass** die Partikel Px aus einem oder mehreren der folgenden Mx-Materialien ausgewählt werden können:

(i) Zinnoxynitride (der typischen Formel $SnO_xN_y$);
(ii) Gemischte Zinn- und Siliziumoxynitride (der typischen Formel $Si_aSn_bO_yN_z$ worin $a>0$, $b>0$, $a+b\leq2$, $0<y\leq4$, $0<z\leq3$) (auch SiTON genannt), und insbesondere $SiSn_{0,87}O_{1,2}N_{1,72}$; und Oxynitride der Form $Si_aSn_bC_cO_yN_z$ worin $a>0$, $b>0$, $a+b\leq2$, $0<c-10$, $0<y<24$, $0<z<17$; $Si_aSn_bC_cO_yN_zX_n$ und $Si_aSn_bO_yN_zX_n$ worin $X_n$ wenigsten eins der Elemente F, Cl, Br, I, S, Se, Te, P, As, Sb, Bi, Ge, Pb ist;
(iii) die Oxyde $SnO_2$, $Li_4Ti_5O_{12}$, $SnB_{0,6}P_{0,4}O_{2,9}$.

13. Verfahren nach einem der Ansprüche 1 bis 10 zur Herstellung eines dünnen Elektrolytfilms in einer Li-Ionen-Batterie, **dadurch gekennzeichnet, dass** die Materialien Px vorteilhafterweise aus einem oder mehreren der folgenden Mx-Materialien ausgewählt sind:

(i) lithiierte Verbindungen auf Basis von Lithium- und Phosphoroxynitrid (LiPON genannt) in $Li_xPO_yN_z$ -Form mit x -2,8 und $2y + 3z-7,8$ und $0,16 <z <0,4$ und insbesondere $Li_{2,9}PO_{3,3}N_{0,46}$ aber auch alle Varianten in Form von $Li_wPO_xN_yS_z$ mit $2x + 3y + 2z = 5 = w$ und $3.2 <x <3.8$, $0.13 <y <0.4$, $0 <z <0.2$, $2.9 <w <3,3$ oder in der Form $Li_tP_xAl_yO_uN_vS_w$ mit $5x + 3y = 5$, $2u + 3v + 2w = 5 + t$, $2,9 <t <3,3$, $0,94 <x <0,84$, $0,094 <y <0,26$, $3,2 <u <3,8$, $0,13 <v <0,46$, $0 <w <0,2$;
(ii) lithiierte Verbindungen auf der Basis von Oxynitrid aus Lithium, Phosphor und Silicium (LiSiPON genannt) und insbesondere $Li_{1,9}Si_{0,28}P_{1,0}O_{1,1}N_{10}$;
(iii) Lithiumoxynitriden vom Typ LiBON, LiBSO, LiSiPON, LiSON, Thio-LiSiCON, LiPONB (wobei B, P und S jeweils für Bor, Phosphor und Schwefel stehen);
(iv) die Verbindungen $La_{0,51}Li_{0,34}Ti_{2,94}$, $Li_{3,4}V_{0,4}Ge_{0,6}O4$, $Li_2O-Nb_2O5$, $LiAlGaSPO_4$ ;

(v) Formulierungen auf Basis von $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (worin M = Ge, Ti, und/oder Hf, und worin $0 < x < 1$), $Li_{1+x+y}Al_xTi_{2-x}Si_yP_{3-y}O_{12}$ (worin $0 \leq x \leq 1$ und $0 \leq y \leq 1$), $Li_{1+x+z}M_x(Ge_{1-y}Ti_y)_{2-x}Si_zP_{3-z}O_{12}$ (worin $0 \leq x \leq 0.8$; $0 \leq y \leq 1.0$; $0 \leq z \leq 0.6$), und insbesondere die Formulierungen 4.9LiI-34, $1Li_2O-61B_2O_3$, $0.30Li_2S-0.26B_2S_3-0.44LiI$, $60Li_2S-40SiS_2$, $0.02Li_3PO_4-0.98(Li_2S-SiS_2)$, $2(Li_{1,4}Ti_2Si_{0,4}P_{2,6}O_{12})-AlPO_4$, $0,7Li_2S-0,3P_2S_5$.

14. Verwendung eines Verfahrens nach einem der Ansprüche 1 bis 13 zur Herstellung dünner Schichten und insbesondere dielektrischer, magnetischer, ferroelektrischer, piezoelektrischer, optischer oder Elektrodenschichtschichten in elektronischen, elektrischen oder elektrotechnischen Vorrichtungen und vorzugsweise in Vorrichtungen ausgewählt aus der Gruppe bestehend aus: Batterien, Kondensatoren, Widerständen, Induktoren, Transistoren, photovoltaischen Zellen.

## Claims

1. Process for deposition of a dense thin film with a porosity of less than 20 % and comprising at least one material Px on a substrate, in which:

   a) a colloidal suspension is provided containing nanoparticles of at least one material Px, in which the diameter D50 of said nanoparticles of at least one of the materials Px is less than 100 nm, preferably less than 30 nm and even more preferably less than 10 nm.
   b) said substrate is immersed in said colloidal suspension, together with a counter electrode,
   c) an electrical voltage is applied between said substrate and said counter electrode so as to obtain the electrophoretic deposition of a compact film comprising nanoparticles of said at least one material Px on said substrate,
   d) said compact film is dried,
   e) said film is mechanically consolidated,
   f) thermal consolidation is carried out at a temperature $T_R$ that does not exceed 0.7 times and preferably does not exceed 0.5 times, and even 0.3 times the melting or decomposition temperature (expressed in °C) of the material Px that melts at the lowest temperature, preferably at a temperature of between 160°C and 600°C, and even more preferably at a temperature of between 160°C and 400°C,

   knowing that steps (e) and (f) can be carried out simultaneously, or can be inverted.

2. Process according to claim 1, in which the electrophoretic deposit obtained in step (c) is less than 10 $\mu$m thick and preferably less than 5 $\mu$m thick.

3. Process according to claim 1 or 2, in which said colloidal solution contains nanoparticles of several different materials (referred to as $Px_1$, $Px_2$, etc.).

4. Process according to any one of claims 1 to 3, in which said colloidal solution also contains particles of at least one material Mx, said particles possibly but not necessarily being nanoparticles.

5. Process according to any one of claims 1 to 4, in which said colloidal suspension has a zeta potential of more than 40 mV, and preferably more than 60 mV, expressed in absolute value.

6. Process according to any one of claims 1 to 5, in which said colloidal suspension contains a steric or electrostatic stabilizer.

7. Process according to any one of claims 1 to 5, in which said colloidal suspension does not contain a steric or electrostatic stabilizer.

8. Process according to any one of claims 1 to 7, in which the mechanical consolidation is carried out at pressures between 10 and 100 MPa, preferably between 10 and 50 MPa, and even more preferably between 15 and 35 MPa.

9. Process according to any one of claims 1 to 8, in which the dense thin film obtained that has a porosity of less than 20%, has a porosity of less than 10%, and preferably of less than 5%.

**10.** Process according to any one of claims 1 to 9, in which said thermal consolidation step is performed under vacuum.

**11.** Process according to any one of claims 1 to 10 for the preparation of thin cathode films in a Li-ion battery,, **characterized in that** the Px particles be chosen from among one or several of the following materials Mx:

(i) $LiMn_2O_4$, $LiCoO_2$, $LiNiO_2$, $LiMn_{1,5}Ni_{0,5}O_4$, $LiMn_{1,5}Ni_{0,5-x}X_xO_4$ oxides (where x is selected from among Al, Fe, Cr, Co, Rh, Nd, other rare earths, and where 0 < x < 0.1), $LiFeO_2$, $LiMn_{1/3}Ni_{1/3}CO_{1/3}O_4$;
(ii) $LiFePO_4$, $LiMnPO_4$, $LiCoPO_4$, $LiNiPO_4$, $Li_3V_2(PO_4)_3$ phosphates;
(iii) all lithium forms of the following chalcogenides: $V_2O_5$, $V_3O_8$, $TiS_2$, $TiO_yS_z$, $WO_yS_z$, CuS, $CuS_2$.

**12.** Process according to any one of claims 1 to 10 for the preparation of a thin anode films in a Li-ion battery, **characterized in that** the Px particles can be chosen from among one or several of the following materials Mx:

(i) tin oxinitrides (typical formula $SnO_xN_y$);
(ii) mixed silicon and tin oxinitrides (typical formula $Si_aSn_bO_yN_z$ where a>0, b>0, a+b≤2, 0<y≤4, 0<z≤3) (also called SiTON), and particularly $SiSn_{0,87}O_{1,2}N_{1,72}$; and oxynitrides in the form $Si_aSn_bC_cO_yN_z$ where a>0, b>0, a+b≤2, 0<c-10, 0<y<24, 0<z<17; $Si_aSn_bC_cO_yN_zX_n$ and $Si_aSn_bO_yN_zX_n$ where $X_n$ is at least one of the elements F, Cl, Br, I, S, Se, Te, P, As, Sb, Bi, Ge, Pb;
(iii) $SnO_2$, $Li_4Ti_5O_{12}$, $SnB_{0,6}P_{0,4}O_{2,9}$ oxides

**13.** Process according to any one of claims 1 to 10 for the preparation of a thin electrolyte film in a Li-ion battery, **characterized in that** the Px particles are advantageously chosen from among one or several of the following materials Mx:

(i) lithium compounds based on lithium and phosphorus oxinitrides (called LiPON) in the form $Li_xPO_yN_z$ where x ~2.8 and 2y+3z ~7.8 and 0.16 ≤ z ≤ 0.4, and particularly $Li_{2,9}PO_{3,3}N_{0,46}$, but also all variants in the form $Li_wPO_xN_yS_z$ where 2x+3y+2z = 5=w and 3.2 ≤ x ≤ 3.8, 0.13 ≤ y ≤ 0.4, 0 ≤ z ≤ 0.2, 2.9 ≤ w ≤ 3.3 or in the form $Li_tP_xAl_yO_uN_vS_w$ where 5x+3y=5, 2u+3v+2w=5+t, 2.9≤t≤3.3, 0.94≤x≤0.84, 0.094≤y≤0.26, 3.2≤u≤3.8, 0.13≤v≤0.46, 0≤w≤0.2;
(ii) lithium compounds based on lithium, phosphorus and silicon oxinitrides (called LiSiPON), and particularly $Li_{1,9}Si_{0,28}P_{1,0}O_{1,1}N_{10}$;
(iii) lithium oxinitrides of the LiBON, LiBSO, LiSiPON, LiSON, thio-LiSiCON, LiPONB types (where B, P and S represent boron, phosphorus and sulfur respectively);
(iv) $La_{0,51}Li_{0,34}Ti_{2,94}$, $Li_{3,4}V_{0,4}Ge_{0,6}O_4$, $Li_2O-Nb_2O_5$, $LiAlGaSPO_4$ compounds;
(v) formulations based on $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (where M = Ge, Ti, and/or Hf, and where 0 < x < 1), $Li_{1+x+y}Al_xTi_{2-x}Si_yP_{3-y}O_{12}$ (where 0≤x≤1 and 0≤y≤1), $Li_{1+x+z}M_x(Ge_{1-y}Ti_y)_{2-x}Si_zP_{3-z}O_{12}$ (where 0 ≤ x ≤ 0.8; 0 ≤ y ≤ 1.0; 0 ≤ z ≤ 0.6), and particularly formulations 4.9LiI-34, $1Li_2O-61B_2O_3$, $0.30Li_2S-0.26B_2S_3-0.44LiI$, $60Li_2S-40SiS_2$, $0.02Li_3PO_4-0.98(Li_2S-SiS_2)$, $2(Li_{1,4}Ti_2Si_{0,4}P_{2,6}O_{12})-AlPO_4$, $0,7Li_2S-0,3P_2S_5$.

**14.** Use of a process according to any one of claims 1 to 13 for the fabrication of thin films, and particularly dielectric, magnetic, ferroelectric, piezoelectric, optical films or electrode films in electronic, electrical or electrotechnical devices and preferably in devices selected in the group composed of batteries, capacitors, resistors, inductors, transistors, photovoltaic cells.

Figure 1 (a)

Figure 1 (b)

Figure 1 (c)

Figure 1 (d)

Figure 1 (e)

Figure 2a

47

44

41

42

43

Figure 2b

| Réaliser une suspension colloïdale des matériaux à déposer |
| --- |

↓

| Mettre en contact la surface à revêtir et la suspension colloïdale |
| --- |

↓

| Appliquer un champ électrique entre la surface à revêtir et une contre-électrode également située dans la suspension colloïdale le temps nécessaire pour obtenir la quantité déposée souhaitée |
| --- |

↓

| Sécher le revêtement |
| --- |

↓

| Fritter et    compacter le revêtement |
| --- |

Figure 3

Figure 4

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010076428 A
- US 7662265 B
- US 6887361 B
- US 2007184345 A
- WO 2007061928 A
- US 2008286651 A
- WO 2010011569 A
- US 7790067 B
- JP 4501247 B
- JP 2002042792 A

**Littérature non-brevet citée dans la description**

- Advances in Lithium-Ion Batteries. Kluever Academic / Plenum Publishers, 2002
- **E. ANTONELLI et al.** Electrophoretic deposition of Ba0,77Ca0,23TiO3 nanopowders. *Journal of Materials Processing Technology,* 2008, vol. 203, 526-531
- **W. LIU ; G.C. FARRINGTON ; F. CHAPUT ; B. DUNN.** Synthesis and Electrochemical Studies of Spinel Phase LiMn2O4 Cathode Materials Prepared by the Pechini Process. *J. Electrochem. Soc.,* 1996, vol. 143 (3
- **M. KALBAC ; M. ZUKALOVA ; L. KAVAN.** Phase-pure nanocrystalline Li4Ti5O12 for a lithium-ion battery. *J Solid State Elecrtochem,* 2003, vol. 8, 2-6
- **XIAO et al.** Thin-film lithium-ion battery derived from Li1,3Al0,3Ti1,7(PO4)3 sintered pellets. *Trans. Nonferrous Me. Soc. China,* 2006, vol. 16, 281-285